# EUROPEAN PATENT APPLICATION

(11) **EP 0 855 305 A2**
(43) Date of publication of application: **29.07.1998**
(21) Application number: 98100954.1
(22) Date of filing: 21.01.1998
(51) Int. Cl.: B60K 17/12, B60K 25/00

(54) **Self-propelled electric traction means with onboard generator set**

(30) Priority: 28.01.1997 IT MI970050 U
(71) Applicant: W.S.A. Wolfsgruber Spezialmaschinen und Anlagenbau GmbH, 96515 Sonneberg (DE)
(72) Inventor: Wolfsgruber, Guglielmo, 22044 Inverigo (Como) (IT)
(74) Representative: Lecce, Giovanni

(57) **Abstract**

A self-propelled electric traction means comprises a bearing frame (1) provided with two couples of wheels (6, 7) and a traction means connected to at least one of said wheels, comprising a generator set (10) whose current generator (12) activates an electric engine for the electric or electrohydraulic traction.

## Description

The present invention relates to a self-propelled electric traction means with onboard generator set.

The self-propelled means of the present invention is applicable, in particular, in agricultural works, especially in the cultivation of small plots or in gardening works, or maintenance of green areas.

As is known, for agricultural cultivations self-propelled means are used, such as for instance tractors, provided with devices for connecting and supporting complementary accessories such as mechanical shovels, blades, grabs, buckets, arms or forks for handling materials, lawn mowers and the like for agricultural or excavation works.

Said self-propelled works are activated by mechanical transmission means connected to an engine, usually of the explosion type.

Hydraulic or pneumatic activation means provide to the control of the different movements of the accessories.

Said self-propelled means have several drawbacks, especially if they are intended for use in the cultivation of small plots or for gardening and/or maintenance of villas or parks. One of said drawbacks is due to the fact that the self-propelled means of the known art are noisy, which is unacceptable when they are utilised for the maintenance of green areas included in urban and housing schemes.

Besides, the maintenance of the self-propelled means with explosion engine of the known art is very expensive as it is necessary to transfer the whole means to a specialised laboratory in case of breakdowns and repairs.

Object of this invention is to eliminate the aforesaid drawbacks.

More particularly, object of this invention is to realise a self-propelled means of minimum size, easily manoeuvrable in small spaces, safe and noiseless, whose components, and in particular the traction means, can be easily disassembled and replaced or repaired with a marked reduction in maintenance costs.

According to the present invention, these and still other objects are achieved by a self-propelled means comprising a bearing frame provided with couples of wheels and a traction means connected to at least one of said couples of wheels, wherein said traction means comprises a generator set whose current generator activates and electric engine for the electric or electrohydraulic traction.

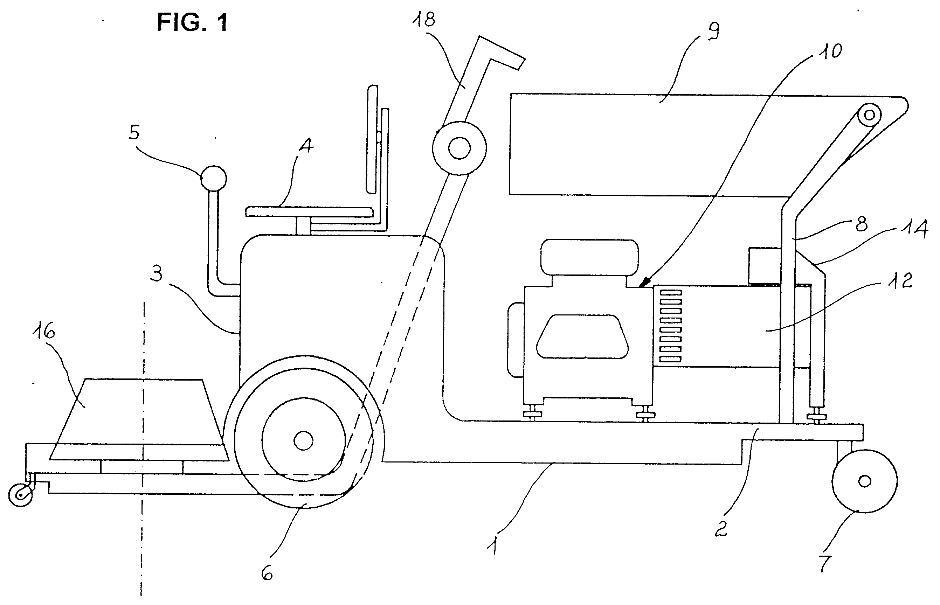

The self-propelled means of the present invention will be better understood thanks to the following description wherein reference is made to the attached drawing which is a schematic side elevation view of a preferred, nonexclusive, embodiment of the self-propelled means, solely given by way of non limiting example.

With reference to the drawing, the self-propelled means comprises a bearing frame or flatbed 1 whereon there is connected in a movable way through known fasteners 10 a generator set. In the preferred embodiment, shown in the aforesaid drawing, said bearing frame or flatbed 1 is constituted, by way of example, by a back part 2 which defines a supporting table for the generator set 10 and a front part 3, wherein there are placed, connected through known fasteners, a seat 4, which defines the driving position, and the mechanisms for the control and drive of the self-propelled means, schematically indicated by 5.

On the opposite sides, flatbed 1 is provided with front wheels 6 and back wheels 7 of a known type.

The generator set 10 may be of any known type or model commercially available and produced by any maker, without affecting the functionality of the self-propelled means or introducing mechanical changes. Said generator set comprises a current generator 12, suitable to feed an electric engine for electric or electrohydraulic traction. Said engine may be connected to the axle of the front wheels 6 or a hydraulic pump which can provide hydraulically to the traction and the other movements required by the agricultural works.

The front part 3 of flatbed 1 is provided with fasteners for the various work tools.

In the specific case shown in the drawing, the tool is an electric lawn mower 16 provided with tube 18 for the removal of cut grass.

Lawn mower 16 may be replaced by any other tool or equipment for agricultural or maintenance works, such as for instance a hoe of the like. Lawn mower 16 is activated by the electric engine 12 according to known techniques.

On the back part 2 of the flatbed a supporting tubular frame 8 is fixed, with an axis orthogonal to the rolling direction of the self-propelled means. At the free end of said frame 8 a tiltable collection tanks 9 is hinged. The evacuation tube 18 of lawn mower 16 is so oriented as to flow into said connection tank 9.

The current generator 12 may be provided with a panel 14 provided with a current tap for feeding electric energy to the auxiliary electric equipment, such as for instance, exhaust fans, compressors, drills, saws, bush-cutters, lamps, garden shears, electric hammers, etc.

The generator set 10 may be covered by a mobile sound-absorbing envelope (not shown).

Thanks to the use of the electric transmission, the self-propelled means of the present invention is very simple from the construction point of view, has very contained overall dimensions, is noiseless and economical for a wide market.

The facility of disassembly and replacement of the generator set 10, combined with the low and almost non existent maintenance required gives rise to a maintenance complexity and time practically null, and consequently also maintenance costs are minimised.

The presence of a current tap allows to use directly on the field and far from house any electrically fed accessory, allowing in this way to have a mobile point of energy feeding in a field, a garden, a park, and making it possible - or anyhow eliminating the inconvenience of using patch cords - the use of said accessories.

A further advantage lies in that the utilisation of an electric traction causes the accidental movement of the self-propelled means to be impossible, making it safer relatively to self-propelled means activated by explosion engines.

The use of the electric generator together with a generator set soundproofed in themselves, possibly covered by a sound-absorbing envelope, renders extremely noiseless the means, and therefore suitable for use for instance for the maintenance of hospital gardens, rest homes, offices, etc.

Even though the electric traction self-propelled means subject matter of this invention has been described with reference to a preferred embodiment of the same, many modifications and variants may be introduced by those skilled in the art, within the scope of the invention concept.

Besides, all details may be replaced by other technically comparable ones.

In practice, the material used as well as the contingent size and shapes are of a known type and may be chosen according to need.

## Claims

1. A self-propelled electric traction means, comprising a bearing frame (1) provided with couples of wheels (6, 7) and a traction means connected to at least one of said couples of wheels, characterised in that said traction means comprises a generator set (10) whose current generator (12) activates an electric engine for the electric or electrohydraulic traction.

2. The self-propelled means according to claim 1, characterised in that the bearing frame (1) comprises a first part (2) whereon the generator set (10) is fastened in a movable way, and a second part (3), whereon seat (4) and control mechanisms (5) are located.

3. The self-propelled means according to claim 1 or 2, characterised in that frame (1) comprises a connection base for fitting tools (16) for agricultural and maintenance works, electrically fed by said generator set (10).

4. The self-propelled means according to any of the preceding claims, wherein the generator set (10) comprises a panel (14) provided with current taps for feeding electric energy to the auxiliary equipment.
